# EUROPEAN PATENT APPLICATION

(11) **EP 3 647 381 A1**
(43) Date of publication of application: **06.05.2020**
(21) Application number: 18843458.3
(22) Date of filing: 31.07.2018
(51) Int. Cl.: C09D 11/322, B41J 2/01, B41M 5/00

(54) **AQUEOUS INKJET INK AND METHOD FOR PRODUCING PRINTED MATTER**

(30) Priority: 10.08.2017 JP 2017155704
(71) Applicant: Seiren Co., Ltd., Fukui-shi Fukui 918-8560 (JP)
(72) Inventor: SAWAZAKI, Takumi, Fukui-shi Fukui 918-8560 (JP)
(74) Representative: Hynell Intellectual Property AB
(86) International application number: PCT/JP2018/028744
(87) International publication number: WO 2019/031317

(57) **Abstract**

Provided is a water-based inkjet ink, comprising: a fluorine resin; a wetting agent; a pigment; a curing agent; and a water-based solvent, wherein the fluorine resin has a hydroxyl value of 10 to 30 mg KOH/g, and wherein the wetting agent does not comprise a hydroxy group.

## Description

### TECHNICAL FIELD

The present invention relates to a water-based inkjet ink and a method for producing a printed matter. In particular, the present invention relates to a water-based inkjet ink being excellent in long-time storage stability and being capable of obtaining a printed matter excellent in weather resistance and water repellency, and a method for producing a printed matter.

### BACKGROUND ART

In recent years, an ink comprising a fluorine resin attracts attention as an ink for producing a printed matter being excellent in weather resistance. Moreover, there has been known an ink comprising water as a medium (solvent) because such an ink is inexpensive, is easily handled, and has less load on an environment. For example, Patent Document 1 discloses a recording liquid composition for an inkjet printer comprising a fluorine resin (A) comprising any one or both of a copolymer (A1) having a fluoroolefin-based component unit (A1-1) and a component unit (A1-2) derived from a monomer having a crosslinkable group and polyvinyliden fluoride (A2), a curing agent (B), a coloring agent (C), and a medium (D).

### PRIOR ART DOCUMENT

### Patent Document

Patent Document 1: JP 2015-86313 A

### SUMMARY OF THE INVENTION

The ink described in Patent Document 1 has a problem in that sedimentation occurs when the ink is stored for a long period of time. Moreover, the ink described in Patent Document 1 produces by-products being impurities during formation of a coating film at the time of producing a printed matter. As a result, an obtained printed matter is degraded in weather resistance and water repellency.

The present invention has been made to solve the problem described above, and has an object to provide a water-based inkjet ink being excellent in long-time storage stability and being capable of obtaining a printed matter excellent in weather resistance and water repellency, and a method for producing a printed matter.

As a result of extensive studies on the cause of the sedimentation, the inventor of the present invention has arrived at the following findings. Specifically, a curing agent dissolved in an ink and a hydroxy group derived from a wetting agent also dissolved in the ink among main components other than the curing agent blended in the ink react with each other during storage for a long period of time to cause the sedimentation. Based on the finding, the inventor of the present invention focused on that the reaction between the curing agent and the wetting agent may be prevented through use of a wetting agent that does not comprise the hydroxy group as the wetting agent. Moreover, the inventor of the present invention found that use of a fluorine resin having a predetermined hydroxyl value further improves storage stability of the water-based inkjet ink and achieves excellent water repellency of a coating film on an obtained printed matter, and has completed the present invention.

According to one embodiment of the present invention for solving the above-mentioned problem, there is provided a water-based inkjet ink, comprising: a fluorine resin; a wetting agent; a pigment; a curing agent; and a water-based solvent, wherein the fluorine resin has a hydroxyl value of 10 to 30 mg KOH/g, and wherein the wetting agent does not comprise a hydroxy group.

Moreover, according to one embodiment of the present invention for solving the above-mentioned problem, there is provided a method for producing a printed matter, comprising a step of applying the above-mentioned water-based inkjet ink to a substrate by an inkjet method.

### EMBODIMENT FOR CARRYING OUT THE INVENTION

### <Water-based inkjet ink>

A water-based inkjet ink (hereinafter referred to also as "ink") according to one embodiment of the present invention comprises a fluorine resin, a wetting agent, a pigment, a curing agent, and a water-based solvent. The fluorine resin has a hydroxyl value of 10 to 30 mg KOH/g. The wetting agent does not comprise a hydroxy group. Such an ink is less liable to cause sedimentation and is excellent in long-time storage stability. Moreover, when a printed matter is produced using such an ink, by-products being impurities are less liable to be produced during formation of a coating film. As a result, an obtained printed matter is excellent in weather resistance and water repellency. Each of the components is described below.

### (Fluorine resin)

The fluorine resin is blended for imparting weather resistance to a printed matter obtained using the ink of the present embodiment. It is preferred that the fluorine resin be a copolymer of any of various fluorine-containing monomers and a vinyl monomer. Moreover, it is more preferred that the fluorine resin be a copolymer with a vinyl ether monomer among vinyl monomers. It is more preferred that the fluorine resin be a copolymer of fluoroethylene and a vinyl ether monomer described later from a point that weather resistance for a longer period of time may be imparted to an obtained printed matter.

Examples of the fluorine-containing monomer include tetrafluoroethylene, chlorotrifluoroethylene, trichlorofluoroethylene, hexafluoropropylene, vinylidene fluoride, vinyl fluoride, and trifluoromethyl trifluoroethylene. Among those, it is preferred that the fluorine-containing monomer be fluoroethylene, more preferably tetrafluoroethylene or chlorotrifluoroethylene, from a point that a printed matter exhibiting excellent weather resistance can be obtained from an ink comprising a fluorine resin being a copolymer with a vinyl monomer described later.

Examples of the vinyl monomer include nonionic monoethylenic unsaturated monomers and bi-functional vinyl monomers. Examples of the nonionic monoethylenic unsaturated monomers include styrene, vinyltoluene, ethylene, vinyl acetate, vinyl chloride, vinylidene chloride, acrylonitrile, (meth)acrylamide, and (meth)acrylic esters. Examples of the (meth)acrylic esters include methyl acrylate, methyl methacrylate, ethyl (meth)acrylate, butyl (meth)acrylate, 2-hydroxyethyl (meth)acrylate, 2-ethylhexyl (meth)acrylate, benzyl (meth)acrylate, lauryl (meth)acrylate, oleyl (meth)acrylate, palmityl (meth)acrylate, and stearyl (meth)acrylate. Examples of the bi-functional vinyl monomers include divinylbenzene, allyl methacrylate, ethyleneglycol dimethacrylate, 1,3-butanediol dimethacrylate, diethylene glycol dimethacrylate, and trimethylolpropane trimethacrylate.

Examples of the vinyl ethers include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether and trimethylolpropane trivinyl ether, and monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenylether-o-propylene carbonate, dodecyl vinyl ether, diethylene glycol monovinyl ether and octadecyl vinyl ether.

A copolymerization ratio of the fluorine-containing monomer to the vinyl monomer is not particularly limited. Examples of the copolymerization ratio include the fluorine-containing monomer: the vinyl monomer = 3 to 1 : 1 to 2 (weight ratio). When the copolymerization ratio falls within such a range, a printed matter obtained using an ink comprising such a fluorine resin is likely to exhibit excellent weather resistance. A polymerization method is not particularly limited. Examples of the polymerization method include solution polymerization, suspension polymerization, bulk polymerization, and emulsion polymerization.

The obtained fluorine resin may be any of an alternating copolymer, a block copolymer, a random copolymer, and a graft copolymer. Among those, it is preferred that the fluorine resin be an alternating copolymer of fluoroethylene and a vinyl monomer. According to the ink comprising such a fluorine resin, a printed matter being more excellent in weather resistance is likely to be obtained. For that reason, the ink can form a printed matter exhibiting a desired color for a longer period of time. In the present embodiment, the "alternating copolymer" means a copolymer comprising a much larger amount of a bond of a fluoroethylene unit and a vinyl monomer unit than a bond of a fluoroethylene unit and a fluoroethylene unit and a bond of a vinyl monomer unit and a vinyl monomer unit. Specifically, it is preferred that the alternating copolymer of the present embodiment comprises 90 to 100 mol% of the bond of a fluoroethylene unit and a vinyl monomer unit. In the present embodiment, the alternating copolymer may comprise a small number of random bonding portions and block bonding portions. Moreover, the above-mentioned bonds can be discriminated by, for example, ¹H-NMR measurement and ²⁹Si-NMR measurement. Further, for a method of analyzing alternating copolymerizability, for example, Journal of Applied Polymer Science, Vol. 106, 1007-1013 (2007) can be referred to.

It is preferred that the fluorine resin of the present embodiment have a hydroxyl value of 10 mg KOH/g or more, more preferably 15 mg KOH/g or more. Moreover, it is preferred that the fluorine resin have a hydroxyl value of 30 mg KOH/g or less, more preferably 25 mg KOH/g or less. When the hydroxyl value is less than 10 mg KOH/g, the fluorine resin is less likely to react with the curing agent. As a result, a coating film of an obtained printed matter is liable to be degraded in coating film strength. Meanwhile, when the hydroxyl value is more than 30 mg KOH/g, the ink is liable to be degraded in long-time storage stability. In the present embodiment, the hydroxyl value is the number of milligrams (mg) of potassium hydroxide required for neutralizing acetic acid bonded to a hydroxyl group when 1 g of a sample (a solid content of a resin) was acetylated, and is measured by a method in accordance with JIS K 0070. Moreover, when fluorine resins are used in combination, a hydroxyl value may be calculated based on respective hydroxyl values of the fluorine resins used in combination. That is, for example, when the same amount of two kinds of fluorine resins having different hydroxyl value are used, the hydroxyl value of the obtained fluorine resin is regarded as an average value of respective hydroxyl values of the fluorine resins.

A weight-average molecular weight (Mw) of the fluorine resin is not particularly limited. For example, it is preferred that Mw be 5,000 or more, more preferably 8,000 or more. It is preferred that Mw be 200,000 or less, more preferably 150,000 or less. When Mw falls within the range described above, the fluorine resin is easily dissolved in water and can be stably used. Moreover, an obtained printed matter has less tackiness on a surface of an image, and when printed matters are placed on one another, anti-blocking property is excellent. When Mw is less than 5,000, tackiness is liable to arise on an obtained printed matter and anti-blocking property is liable to be degraded. Meanwhile, when Mw is more than 200,000, stability in discharging of an obtained ink at the time of inkjet printing is liable to be degraded. In the present embodiment, Mw is a value measured by, for example, GPC (gel permeation chromatography) and can be measured using a high speed GPC device (HLC-8120GPC manufactured by TOSO CORPORATION).

It is preferred that the fluorine resin of the present embodiment be of an emulsion type from a point that storage stability for the obtained ink is excellent and that the fluorine resin is likely to react with the curing agent.

When the fluorine resin is of the emulsion type, a particle diameter of the fluorine resin emulsion is not particularly limited. It is preferred that the particle diameter be 100 nm or larger, more preferably 150 nm or larger. Moreover, it is preferred that the particle diameter be 300 nm or smaller, more preferably 250 nm or smaller. When the particle diameter falls within the range described above, the fluorine resin has a suitable surface area, is less liable to react with the curing agent, and is excellent in storage stability. Moreover, the fluorine resin is excellent in film-forming property of an ink, and is likely to form a desired coating film. When the particle diameter is smaller than 100 nm, the fluorine resin has an excessively large surface area and becomes higher in activeness, and is liable to react with the curing agent. Therefore, the ink is liable to be degraded in storage stability. Meanwhile, when the particle diameter is larger than 300 nm, the ink is liable to be degraded in film-forming property, and particles thereof are liable to clog in the nozzle at the time of inkjet printing. In the present embodiment, the particle diameter is an average particle diameter. Such an average particle diameter can be calculated, for example, by a dynamic light scattering method using a particle diameter analyzing device (Zetasizer Nano-S, manufactured by Malvern Instruments Ltd), by diluting the emulsion with pure water and performing measurement under the condition of 20°C.

A content of the fluorine resin is not particularly limited. For example, it is preferred that the content of the fluorine resin in an ink based on a solid content thereof be 2% by mass or more, more preferably 5% by mass or more. Moreover, it is preferred that the content of the fluorine resin in an ink be 40% by mass or less, more preferably 30% by mass or less. When the content of the fluorine resin is 2% by mass or more, the ink is likely to be excellent in stability in discharging at the time of inkjet printing. Meanwhile, when the content of the fluorine resin is more than 40% by mass, the ink is liable to be high in viscosity, and the stability in discharging at the time of inkjet printing is liable to be degraded.

### (Wetting agent)

The wetting agent is blended for preventing degradation of the stability in discharging due to drying of an ink around a head at the time of inkjet printing. The wetting agent used in the present embodiment does not comprise a hydroxy group. Therefore, such a wetting agent does not react with the curing agent even when the ink is stored for a long period of time. As a result, the ink does not cause the sedimentation, and is excellent in long-time storage stability.

Any wetting agent which does not comprise the hydroxy group may be adopted. Example of such a wetting agent include N-methyl-2-pyrrolidone, urea, tetramethyl urea, dimethylsurfoxide, 2-pyrrolidone, 1,3-dimethyl-imidazolidinone, and N,N'-dimethylpropylene urea. Among those, from a point of being a liquid at a normal temperature, being high in stability, and being easy to handle, it is more preferred that the wetting agent be N-methyl-2-pyrrolidone. The wetting agents may be used in combination.

A content of the wetting agent is not particularly limited. For example, it is preferred that the content of the wetting agent in an ink be 10% by mass or more, more preferably 20% by mass or more. Moreover, it is preferred that the content of the wetting agent in an ink be 60% by mass or less, more preferably 50% by mass or less. When the content of the wetting agent is less than 10% by mass, the ink is liable to be dried, and the stability in discharging is liable to be degraded. Meanwhile, when the content of the wetting agent is more than 60% by mass, the ink is less likely to be dried, and blur is liable to occur at the time of printing. The wetting agent of the present embodiment does not comprise the hydroxy group. Therefore, even when the content is large, such a feature does not affect the occurrence of the sedimentation caused by the reaction with the curing agent.

### (Pigment)

Various pigments or organic pigments may be blended as a pigment. Examples of inorganic pigments include oxides, complex oxides, hydroxides, sulfides, ferrocyanides, chromates, carbonates, silicates, phosphates, carbons (carbon black), and metallic flakes. Examples of organic pigments include nitroso pigments, lake pigments, azo lake pigments, insoluble azo pigments, monoazo pigments, disazo pigments, azo condensation pigments, benzimidazolone pigments, phthalocyanine pigments, anthraquinone pigments, perylene pigments, quinacridone pigments, dioxazine pigments, isoindolinone pigments, azomethine pigments, and pyrrolo-pyrrole pigments. Those pigments may be used in combination.

From a point that an obtained printed matter is excellent in weather resistance, it is preferred that the pigment of the present embodiment comprise the inorganic pigment.

Moreover, the inorganic pigment may be dispersed by various dispersants. From a point that an obtained printed matter is excellent in water repellency, it is more preferred that the inorganic pigment of the present embodiment be an inorganic pigment dispersed by a polymer dispersant.

The polymer dispersant is not particularly limited. Examples of the polymer dispersant include polyoxyalkylene polyalkylenepolyamine, a vinyl-based polymer or copolymer, an acryl-based polymer or copolymer, polyether, polyester, polyamide, polyimide, polyurethane, and an amino-based polymer. Those polymer dispersants may be used in combination.

It is preferred that an acid value of the polymer dispersant be 5 mg KOH/g or more, more preferably 15 mg KOH/g or more. Moreover, it is preferred that an amine value of the polymer dispersant be 15 mg KOH/g or more, more preferably 25 mg KOH/g or more. The polymer dispersant having the acid value and amine value described above is excellent in attraction property with respect to the pigment. In the present embodiment, the acid value represents an acid value per 1 g of a dispersant solid content, and may be calculated by a potentiometric titration method in accordance with JIS K 0070. Moreover, the amine value represents an amine value per 1 g of a dispersant solid content, and may be calculated using 0.1 mol/L of a hydrochloric solution by converting a value calculated by a potentiometric titration method into a corresponding amount of potassium hydroxide.

A dibutyl phthalate oil absorption (DBP oil absorption) of the pigment of the present embodiment is not particularly limited. For example, it is preferred that the DBP oil absorption of the pigment be 100 cm³/100 g or less, more preferably 50 cm³/100 g or less. Moreover, it is preferred that the DBP oil absorption be 1 cm³/100 g or more, more preferably 10 cm³/100 g or more. When the DBP oil absorption falls within the range described above, the ink is excellent in storage stability. When the DBP oil absorption is more than 100 cm³/100 g, the pigment has a large specific surface area and large surface free energy. Therefore, in some cases, aggregation may progress in the ink, or the ink is increased in viscosity. Meanwhile, when the DBP oil absorption is less than 1 cm³/100 g, the ink has a large initial particle diameter of the ink and becomes difficult to disperse, with the result that formation of the ink is liable to be difficult. In the present embodiment, the DBP oil absorption can be measured, for example, by a method stipulated in JIS K 6217-4 using an oil absorption measurement device (S-500, manufactured by Asahisouken).

A content of the pigment is not particularly limited. For example, it is preferred that the content of the pigment in an ink be 0.01% by mass or more, more preferably 0.1% by mass or more. Moreover, it is preferred that the content of the pigment in an ink be 30% by mass or less, more preferably 20% by mass or less. When the content of the pigment is less than 0.01% by mass, sufficient coloring is less liable to be achieved. Meanwhile, when the content of the pigment is more than 30% by mass, a viscosity of the ink becomes higher, and the stability in discharging at the time of inkjet printing is liable to be degraded.

### (Curing agent)

The curing agent may be blended for curing an ink. The curing agent is not particularly limited. Examples of the curing agent include an isocyanate curing agent, a blocked isocyanate curing agent, an amine curing agent, an acid anhydride curing agent, and a carbodiimide curing agent. Those curing agents may be used in combination. Among those, it is preferred that the curing agent comprise an isocyanate resin. Accordingly, an obtained printed matter is more excellent in weather resistance.

An isocyanate resin may be a compound having two or more isocyanate groups in one molecule thereof, and any of general-purpose, less-yellowing and non-yellowing isocyanate resins can be used. Examples of general-purpose isocyanate resins include tolylene diisocyanate (TDI), isocyanurate, i.e. trimerized TDI, 4,4-diphenylmethane diisocyanate (MDI) and polymeric diphenylmethane diisocyanate (polymeric MDI). Examples of less-yellowing isocyanate resins include xylylenediamine (XDI). Examples of non-yellowing isocyanate resins include hexamethylene diisocyanate (HDI), isophorone diisocyanate (IPDI), hydrogenated XDI, and hydrogenated MDI. Among those, it is preferred that the curing agent comprise non-yellowing blocked isocyanate, more preferably non-yellowing blocked isocyanate having an isocyanurates structure. When such a curing agent is blended, an ink is more excellent in curability. Moreover, when such an ink is used, an obtained printed matter is more excellent in weather resistance. Accordingly, the printed matter is likely to exhibit a desired color for a longer period of time.

Moreover, it is preferred that the curing agent of the present embodiment be water-dispersing blocked isocyanate. A method for dispersing blocked isocyanate in water is not particularly limited. Examples of the method for dispersing blocked isocyanate in water include a method of causing self-emulsification of the blocked isocyanate and dispersing the blocked isocyanate in water (self-emulsification type) and a method of forcibly causing emulsification of blocked isocyanate with water by mechanical stirring and dispersing the blocked isocyanate (forcible emulsification type). When the water-dispersing blocked isocyanate is used as the curing agent, an ink is less liable to cause separation from the blocked isocyanate, and is excellent in storage stability for a long period of time.

Moreover, when the curing agent comprises blocked isocyanate, a block dissociation temperature of blocked isocyanate is not particularly limited. For example, it is preferred that the block dissociation temperature be 100°C or higher, more preferably 110°C or higher. Moreover, it is preferred that the block dissociation temperature be 180°C or lower, more preferably 150°C or lower. When the block dissociation temperature falls within the range described above, an ink is less liable to cause block dissociation during storage at a normal temperature, and a polymerization reaction with a resin is less liable to progress. Therefore, an ink is more excellent in storage stability. When the block dissociation temperature is lower than 100°C, the ink is liable to cause block dissociation during the storage at a normal temperature and react with a resin, with the result that the storage stability is liable to be degraded. Meanwhile, when the block dissociation temperature is higher than 180°C, the ink is less liable to cause block dissociation, and a sufficient coating film strength is less likely to be obtained. In the present embodiment, the block dissociation temperature may be measured by, for example, using an infrared absorption spectrum method, observing presence or absence of an increase in wavelength range (2,240 cm⁻¹) of an isocyanate group at a specified temperature.

A content of the curing agent changes depending on an additive amount and a hydroxyl value of the fluorine resin, and hence is not uniquely determined. For example, it is preferred that the content of the curing agent in an ink be 0.1% by mass or more, more preferably 1% by mass or more. Moreover, it is preferred that the content of the curing agent in an ink be 20% by mass or less, more preferably 10% by mass or less. When the content of the curing agent is less than 0.1% by mass, the curing agent cannot sufficiently react with the fluorine resin, and a desired performance is less likely to be achieved. Meanwhile, when the content of the curing agent is more than 20% by mass, there is a fear in that the addition of the curing agent is excessive with respect to the fluorine resin, and the weather resistance of the obtained printed matter is degraded.

### (Water-based solvent)

The water-based solvent is a liquid component for suitably dispersing or dissolving the components described above in an ink. The water-based solvent is typically formed of water. Examples of the water include ion exchange water and distilled water.

The water-based solvent may include, in addition to water, a solvent which is typically used for an inkjet ink within a range of not hindering the effect of the ink of the present embodiment. That is, water-soluble optional components may be blended in the water-based solvent.

A content of water in the water-based solvent is not particularly limited. For example, it is preferred that a content of the water in the water-based solvent be 50% by mass or more, more preferably, 80% by mass or more, or the content of the water may be 100% by mass.

A content of the water-based solvent is not particularly limited. For example, it is preferred that the content of the water-based solvent in an ink be 10% by mass or more, more preferably 20% by mass or more. Moreover, it is preferred that the content of the water-based solvent in an ink be 60% by mass or less, more preferably 50% by mass or less. When the content of the water-based solvent is less than 10% by mass, the ink is liable to be high in viscosity, and the stability in discharging at the time of inkjet printing is liable to be degraded. Meanwhile, when the content of the water-based solvent is more than 60% by mass, a ratio of the components to be added becomes lower, and the ink is less likely to achieve a desired performance.

### (Optional components)

The ink of the present embodiment may suitably comprise optional components in addition to the components described above. Examples of the optional components include an ultraviolet absorber, a light stabilizer, an anti-foaming agent, and a curing catalyst.

### • Ultraviolet absorber

The ultraviolet absorber is blended suitably for enhancing weather resistance of a printed matter obtained using the ink of the present embodiment. As a result, the printed matter can exhibit a desired color for a longer period of time.

Examples of the ultraviolet absorber include benzotriazole ultraviolet absorbers, benzophenone ultraviolet absorbers, triazine derivatives, and salicylic acid derivatives. Examples of the benzotriazole ultraviolet absorbers include 2-(2'-hydroxy-5'-methylphenyl)benzotriazole, 2-(2'-hydroxy-5'-tert-butylphenyl) benzotriazole, 2-(2'-hydroxy-5'-tert-butylphenyl)-5-chlorobenzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amylphenyl)benzotriazole, 2-(2'-hydroxy-4'-octylphenyl)benzotriazole, 2-(2'-hydroxy-5'-methacryloxyethylphenyl)-2H-benzotriazole, and 2-{(2'-hydroxy-3',3",4",5",6"-tetrahydrophthalimidemethyl)-5'-methylphenyl}benzotriazole. Examples of the benzophenone ultraviolet absorbers include 2-hydroxybenzophenone, 5-chloro-2-hydroxybenzophenone, 2,4-dihydroxybenzophenone, 2-hydroxy-4-methoxybenzophenone, 2-hydroxy-4-octyloxybenzophenone, 2-hydroxy-4-dodecyloxybenzophenone, 2-hydroxy-4-octadecyloxybenzophenone, 2,2'-dihydroxy-4-methoxybenzophenone, 2,2'-dihydroxy-4,4'-dimethoxybenzophenone, and 2-hydroxy-4-methoxy-5-sulfobenzophenone. Examples of the triazine derivatives include 2-[4-{(2-hydroxy-3-dodecyloxy-propyl)oxy}-2-hydroxyphenyl]-4,6-bis(2, 4-dimethylphenyl)-1,3,5-triazine, 2-[4-{(2-hydroxy-3-tridecyloxy-propyl)oxy}-2-hydroxyphenyl]-4,6-bis(2, 4-dimethylphenyl)-1,3,5-triazine, 2-{4-(octyl-2-methylethanoate)oxy-2-hydroxyphenyl-4,6-{bis(2,4-dimet hylphenyl)}-1,3,5-triazine, and tris[2,4,6-[2-{4-(octyl-2-methylethanoate)oxy-2-hydroxyphenyl}]]-1,3,5-triazine. Examples of the salicylic acid derivatives include phenylsalicylate, p-tert-butylphenylsalicylate, p-octylphenylsalicylate, and p-(1,1,3,3-tetramethylbutyl)phenylsalicylate. Those ultraviolet absorbers may be used in combination.

When the ultraviolet absorber is blended, a content thereof is not particularly limited. For example, it is preferred that the content of the ultraviolet absorber in an ink be 0.01% by mass or more, more preferably 0.1% by mass or more. Moreover, it is preferred that the content of the ultraviolet absorber in an ink be 10% by mass or less, more preferably 5% by mass or less. When the content of the ultraviolet absorber is less than 0.01% by mass, the effect of the ultraviolet absorber is less likely to be sufficiently exerted. Meanwhile, when the content of the ultraviolet absorber is more than 10% by mass, further effect cannot be obtained, and the cost for the ink is liable to increase. Moreover, when the content of the ultraviolet absorber is more than 10% by mass, in a case in which the ultraviolet absorber comprises a hydroxy group, the hydroxy group and the curing agent may react with each other, with the result that the long-time storage stability of the ink may be degraded.

### • Light stabilizer

The light stabilizer is suitably blended for enhancing weather resistance of a printed matter obtained using the ink of the present embodiment. As a result, the printed matter can exhibit a desired color for a longer period of time.

Examples of the light stabilizer include hindered amine light stabilizers. Examples of the hindered amine light stabilizers include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, bis(1-undecyloxy-2,2,6,6-tetramethyl-4-piperidyl)carbonate, tetrakis(2,2,6,6-tetramethyl-4-piperidylbutanetetracarboxylate, tetrakis(1,2,2,6,6-pentamethyl-4-piperidylbutanetetracarboxylate, bis(2,2,6,6-tetramethyl-4-piperidyl)-di(tridecyl)-1,2,3,4-butanetetracarboxylate, bis(1,2,2,6,6-pentamethyl-4-piperidyl)·di(tridecyl)-1,2,3,4-bu tanetetracarboxylate, bis(1,2,2,6,6-pentamethyl-4-piperidyl)-2-butyl-2-(3,5-ditertbutyl-4-hydroxybenzyl)malonate, 1-(2-hydroxyethyl)-2,2,6,6-tetramethyl-4-piperidinol/diethyl succinate condensation polymer, 1,6-bis(2,2,6,6-tetramethyl-4-piperidylamino)hexane/dibromoethane condensation polymer, 1,6-bis(2,2,6,6-tetramethyl-4-piperidylamino)hexane/2,4-dichloro-6-morphorino-s-triazine condensation polymer, 1,6-bis(2,2,6,6-tetramethyl-4-piperidylamino)hexane/2,4-dichloro-6-tertoctylamino-s-triazine condensation polymer, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl) amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-ylaminoundecane, 1,6,11-tris[2,4-bis(N-butyl-N-(1,2,2,6,6-pentamethyl-4-piperidyl)amino) -s-triazine-6-ylaminoundecane, bis(1-octyloxy-2,2,6,6-tetramethyl-4-piperidyl)-decanedioate and the like. Those light stabilizers may be used in combination.

When the light stabilizer is blended, a content of the light stabilizer is not particularly limited. For example, it is preferred that the content of the light stabilizer in an ink be 0.01% by mass or more, more preferably 0.1% by mass or more. Moreover, it is preferred that the content of the light stabilizer in an ink be 10% by mass or less, more preferably 5% by mass or less. When the content of the light stabilizer is less than 0.01% by mass, the effect of the light stabilizer is less likely to be sufficiently exerted. Meanwhile, when the content of the light stabilizer is more than 10% by mass, further effect cannot be obtained, and the cost for the ink is liable to increase. Moreover, when the content of the light stabilizer is more than 10% by mass, in a case in which the light stabilizer comprises a hydroxyl group, the light stabilizer and the curing agent may react with each other, with the result that the long-time storage stability of the ink may be degraded.

### • Anti-foaming agent

The anti-foaming agent is suitably blended for enhancing stability in discharging of the ink at the time of printing. Examples of the anti-foaming agent include a silicone anti-foaming agent and a polyether anti-foaming agent. The anti-foaming agent may be used in combination. Among those, it is preferred that the anti-foaming agent be the silicone anti-foaming agent from a point that the silicone anti-foaming agent is likely to disperse and exert an excellent anti-foaming effect.

Examples of the silicone anti-foaming agent include dimethyl silicone oil, silicone paste, silicone emulsion, organic modified polysiloxane (polyorganosiloxane such as dimethyl polysiloxane), and fluorosilicone.

Examples of the polyether anti-foaming agent include di-t-amylphenoxyethanol, 3-heptylcellusolve, nonylcellusolve, and 3-heptycarbitol.

When the anti-foaming agent is blended, a content of the anti-foaming agent is not particularly limited. For example, it is preferred that the content of the anti-foaming agent in an ink be 0.01% by mass or more, more preferably 0.1% by mass or more. Moreover, it is preferred that the content of the anti-foaming agent in an ink be 5% by mass or less, more preferably 1% by mass or less. When the content of the anti-foaming agent is less than 0.01% by mass, the effect of the anti-foaming agent is less likely to be sufficiently exerted. Meanwhile, when the content of the anti-foaming agent is more than 5% by mass, further effect cannot be obtained, and the cost for the ink is liable to increase. Moreover, when the content of the anti-foaming agent is more than 5% by mass, in a case in which the anti-foaming agent comprises a hydroxy group, the hydroxy group and the curing agent react with each other, with the result that the long-time storage stability of the ink may be degraded.

### • Curing catalyst

Examples of the curing catalyst include organic acid salt, alcoholate or a chelate compound of metal such as tin, titanium, zirconium, iron, antimony, bismuth, manganese, zinc or aluminum; amine such as hexylamine or dodecylamine; amine salts such as acetic hexylamine or dodecylamine phosphate; quaternary ammonium salt such as benzyltrimethylammonium acetate; and alkali metal salt such as potassium acetate. More specifically, examples include organobismuth compounds such as bismuth octylate and bismuth neodecanoate; organotin compounds such as tin octylate, tributyltin dilaurate, dibutyltin dilaurate, dibutyltin dioctylate, dimethyltin dineodecanoate and stannous octoate; and organotitanium compounds such as tetrabutyl titanate, tetraisopropyl titanate, diisopropoxybis(acetylacetonate) titanium and diisopropoxybis(ethylacetoacetate) titanium. Those may be used in combination. It is preferred that the curing catalyst be tin compounds, more preferably tin octylate. When the ink comprises tin octylate as the curing catalyst, an obtained ink is excellent in curability. Moreover, the obtained ink is improved in drying characteristics, and is excellent in stability in discharging at the time of inkjet printing.

When the curing catalyst is blended, a content of the curing catalyst is not particularly limited. For example, it is preferred that the content of the curing catalyst in an ink be 0.001% by mass or more, more preferably 0.01% by mass or more. Moreover, it is preferred that the content of the curing catalyst in an ink be 5% by mass or less, more preferably 3% by mass or less. When the content of the curing catalyst is less than 0.001% by mass, the performance of the curing catalyst is less likely to be sufficiently exerted. Meanwhile, when the content of the curing catalyst is more than 5% by mass, the curability is excessively high, with the result that the stability in discharging at the time of inkjet printing is liable to be degraded.

Returning to the overall description of the ink, a viscosity of the ink is not particularly limited. It is preferred that the viscosity of the ink at 30°C be 5 mPa·s or more, more preferably 6 mPa·s or more. Moreover, it is preferred that the viscosity of the ink at 30°C be 30 mPa·s or less, more preferably 20 mPa·s or less. When the viscosity falls within the range described above, the ink is excellent in stability in discharging. When the viscosity is less than 5 mPa·s, the ink is liable be degraded in stability in discharging at the time of inkjet printing. Meanwhile, when the viscosity is more than 30 mPa·s, the ink is not successfully discharged from a nozzle head, and the stability in discharging at the time of inkjet printing is liable to be degraded. In the present embodiment, the viscosity can be measured using a Brookfield type viscometer (TVB-20LT manufactured by TOKI SNGYO CO., LTD.).

A method of adjusting the viscosity to fall within the range described above is not particularly limited. For example, the viscosity may be adjusted depending on a kind and an additive amount of the fluorine resin to be used. The viscosity may be adjusted using a viscosity modifier such as a thickener as needed.

As described above, the ink of the present embodiment is less liable to cause sedimentation, and is excellent in long-time storage stability. Moreover, at the time of producing a printed matter obtained using such an ink, by-products being impurities are less liable to be produced during formation of the coating film. As a result, an obtained printed matter is excellent in weather resistance and water repellency.

### <Method for producing a printed matter>

The method for producing a printed matter according to one embodiment of the present invention comprises a step of applying the ink described above to a substrate by an inkjet method using an inkjet recording apparatus.

A method of applying an ink to a substrate by an inkjet recording method is not particularly limited. Examples of such method include: continuous types such as a charge modulation type, a micro-dot type, a charge injection control type, and an ink mist type; and on-demand types such as a piezo type, a pulse jet type, a Bubble jet (registered trademark) type, and an electrostatic suction type.

According to the method for producing a printed matter of the present embodiment, the ink comprising the water-based solvent and the wetting agent is used. Therefore, in the present embodiment, a head of an inkjet recording apparatus is less liable to be damaged at the time of inkjet printing. Moreover, the wetting agent does not comprise a hydroxy group. Therefore, in the ink, the curing agent does not react with the wetting agent, and the sedimentation does not occur. Moreover, the ink comprises the fluorine resin having a predetermined hydroxyl value. As a result, the ink is excellent in long-time storage stability. Moreover, at the time of producing a printed matter obtained using such an ink, by-products being impurities are less liable to be produced in the coating film. Accordingly, the obtained printed matter is excellent in weather resistance and water repellency.

A substrate to which the ink is applied is not particularly limited. Examples of the substrate include metal sheets such as a steel sheet, an aluminum sheet and a stainless steel sheet; plastic sheets or films such as acrylic, polycarbonate, ABS, polypropylene, polyester and vinyl chloride sheets or films; ceramic sheet, concrete, wood, glass and the like. Moreover, the substrate may be fabrics made of polyester fibers such as a cationic-dyeable polyester (CDP) fiber, a polyethylene terephthalate (PET) fiber, a polybutylene terephthalate (PBT) fiber, a polytrimethylene terephthalate (PTT) fiber, a wholly aromatic polyester fiber and a polylactic acid fiber, an acetate fiber, a triacetate fiber, a polyurethane fiber, a nylon fiber and a complex fiber thereof. Those may be appropriately selected depending on applications. When the substrate is a fabric, it is preferred that the fabric be subjected to treatment with a pretreatment agent before printing. Examples of the pretreatment agent include a water-soluble polymer, a non-water-soluble inactive organic compound, a flame retardant, an ultraviolet absorber, an anti-reducing agent, an antioxidant, a pH regulator, hydrotropes, an anti-foaming agent, a penetrating agent, and a microporous-forming agent. Examples of a method of applying these pretreatment agents to a fabric include a pad dyeing method, a spraying method, a dipping method, a coating method, a laminating method, a gravure coating method, and an inkjet printing method.

The substrate having the ink applied thereto is then dried. A drying condition is not particularly limited. For example, the drying is performed through heat treatment at 50 to 250°C for 1 to 60 minutes. Through such drying, the water-based solvent in the ink can be removed. In order to prevent ink blur, it is preferred that the drying be performed simultaneously with or immediately after the application of the ink to the substrate.

An obtained printed matter is more excellent in water repellency and weather resistance because the ink described above is used. Therefore, the printed matter can show a desired color for a long period of time.
(1) A water-based inkjet ink, comprising: a fluorine resin; a wetting agent; a pigment; a curing agent; and a water-based solvent, wherein the fluorine resin has a hydroxyl value of 10 to 30 mg KOH/g, and wherein the wetting agent does not comprise a hydroxy group.
   With such a configuration, the water-based inkjet ink is less liable to cause sedimentation, and is excellent in long-time storage stability. Moreover, at the time of producing a printed matter obtained using such a water-based inkjet ink, by-products being impurities are less liable to be produced in a coating film. As a result, an obtained printed matter is excellent in weather resistance and water repellency.
(2) The water-based inkjet ink according to (1), wherein the pigment comprises an inorganic pigment.
   With such a configuration, with the use of the water-based inkjet ink, an obtained printed matter is more excellent in weather resistance.
(3) The water-based inkjet ink according to (2), wherein the inorganic pigment is dispersed by a polymer dispersant.
   With such a configuration, with the use of the water-based inkjet ink, an obtained printed matter is more excellent in water repellency.
(4) The water-based inkjet ink according to any one of (1) to (3), wherein the pigment has a DBP oil absorption of 100 cm³/100 g or less.
   With such a configuration, the water-based inkjet ink is more excellent in storage stability.
(5) The water-based inkjet ink according to any one of (1) to (4), wherein the fluorine resin is a copolymer comprising fluoroethylene and a vinyl monomer.
   With such a configuration, with the use of the water-based inkjet ink according to the present invention, a printed matter which is more excellent in weather resistance can be obtained. Such a printed matter can show a desired color for a longer period of time.
(6) The water-based inkjet ink according to any one of (1) to (5), wherein the fluorine resin is of an emulsion type.
   With such a configuration, the water-based inkjet ink is excellent in storage stability, and the fluorine resin and the curing agent are likely to react with each other. Moreover, the water-based inkjet ink is excellent in film-forming property.
(7) The water-based inkjet ink according to any one of (1) to (6), wherein the curing agent comprises blocked isocyanate, and wherein the blocked isocyanate comprises non-yellowing blocked isocyanate.
   With such a configuration, the obtained water-based inkjet ink is more excellent in curability. Moreover, with the use of such a water-based inkjet ink, a printed matter which is more excellent in weather resistance can be obtained.
(8) The water-based inkjet ink according to any one of (1) to (7), wherein the curing agent comprises blocked isocyanate, and wherein the blocked isocyanate comprises water-dispersing blocked isocyanate.
   With such a configuration, the water-based inkjet is less liable to cause separation of the blocked isocyanate, and is excellent in long-time storage stability.
(9) The water-based inkjet ink according to (7) or (8), wherein a block dissociation temperature of the blocked isocyanate is 100°C or higher.
   With such a configuration, the water-based inkjet ink is less liable to cause block dissociation at the time of storage at a normal temperature, and a polymerization reaction with a resin is less liable to progress. Therefore, the water-based inkjet ink is more excellent in storage stability.
(10) A method for producing a printed matter, comprising a step of applying the water-based inkjet ink of any one of (1) to (9) to a substrate by an inkjet method.

With such a configuration, the water-based inkjet ink is less liable to cause sedimentation, and is excellent in long-time storage stability. Moreover, at the time of producing a printed matter obtained using such a water-based inkjet ink, by-products being impurities are less liable to be produced in a coating film. As a result, an obtained printed matter is excellent in weather resistance and water repellency.

### EXAMPLE

The present invention is described more specifically by means of Examples. There present invention is not limited to those Examples.

Materials used are shown below.

### (Fluorine resin)

LUMIFLON FE4400: Alternating copolymer of ethylene trifluoride and a vinyl ether manufactured by AGC INC., hydroxyl value: 24.5 mg KOH/g, Mw: about 100,000, average particle diameter: 100 to 200 nm, solid content: 50%

LUMIFLON FE4300: Alternating copolymer of ethylene trifluoride and a vinyl ether manufactured by AGC INC., hydroxyl value: 5 mg KOH/g, Mw: about 100,000, average particle diameter: 100 to 200 nm, solid content: 50%

LUMIFLON FD1000: Alternating copolymer of ethylene trifluoride and a vinyl ether manufactured by AGC INC., hydroxyl value: 34 mg KOH/g, Mw: about 7,000, average particle diameter: 50 to 100nm, solid content: 40%

### (Wetting agent)

- Without hydroxy group
   N-methyl-2-pyrrolidone urea
   1,3-dimethyl-imidazolidinone
   dimethylpropylene urea
   tetramethyl urea
- With hydroxy group
   propylene glycol
   ethylene glycol
   glycerin

### (Curing agent)

SU-268A: Aqueous dispersion of non-yellowing blocked isocyanate, solid content: 30%, manufactured by Meisei Chemical Works, Ltd.

### (Ultraviolet absorber)

SHINEGUARD TA-22: hydroxyphenyl triazine ultraviolet absorber manufactured by SENKA corporation

### (Light stabilizer)

SHINEGUARD TL-06: hindered amine light stabilizer manufactured by SENKA corporation

### (Anti-foaming agent)

FS Antifoam 80: silicone anti-foaming agent manufactured by Dow Corning Toray Co., Ltd.

### <Preparation of dispersion>

A method of preparing a dispersion is shown below.

### (Dispersion K)

A dispersion K was prepared by mixing 20 parts by mass of a black pigment (NIPEX35, DBP oil absorption: 37 to 47 cm³/100 g, manufactured by Nippon Lubrizol Kabushiki Kaisha), 10 parts by mass of a dispersant (DISPERBYK-102 (polyether polymer) manufactured by BYK Japan KK, acid value: 101 mmKOH/g), and 70 parts by mass of distilled water with a mixer, and then filtrating the mixture.

### (Dispersion C)

A dispersion C was prepared by mixing 50 parts by mass of a blue pigment (DAIPYROXIDE Blue Sharp 9410 manufactured by Dainichiseika Color & Chemicals Mfg. Co., Ltd., DBP oil absorption: 22 to 32 cm³/100 g), 10 parts by mass of a dispersant (DISPERBYK-102 manufactured by BYK Japan KK (polyether polymer), acid value: 101 mmKOH/g), and 40 parts by mass of distilled water with a mixer, and then filtrating the mixture.

### (Dispersion M)

A dispersion M was prepared by mixing 50 parts by mass of a red pigment (160ED manufactured by TODA KOGYO CORP., DBP oil absorption: 16 to 20 cm³/100 g), 10 parts by mass of a dispersant (DISPERBYK-102 (polyether polymer) manufactured by BYK Japan KK, acid value: 101 mmKOH/g), and 40 parts by mass of distilled water with a mixer, and the filtrating the mixture.

### (Dispersion Y)

A dispersion Y was prepared by mixing 50 parts by mass of a yellow pigment (TSY-1 manufactured by TODA KOGYO CORP., DBP oil absorption: 30 to 38 cm³/100 g), 10 parts by mass of a dispersant (DISPERBYK-102 (polyether polymer) manufactured by BYK Japan KK, acid value: 101 mmKOH/g), and 40 parts by mass of distilled water with a mixer, and filtrating the mixture.

Methods of measuring physical properties are shown below.

### (Hydroxyl value)

A mass (mg) of potassium hydroxide required for neutralizing acetic acid bonded to a hydroxyl group when 1 g of a sample (a solid content of a resin) was acetylated in accordance with JIS K 0070 was used as a hydroxyl value of the sample.

### (Mw)

Mw is a value measured by GPC (gel permeation chromatography), and in Example, was measured using a high speed GPC apparatus (HLC-8120GPC manufactured by TOSO

### CORPORATION).

### (Examples 1 to 12 and Comparative Examples 1 to 5)

Inks were prepared in accordance with the formulations (unit: % by mass) shown in Table 1 below. Inkjet printing was performed using the obtained inks under the following inkjet printing conditions. The obtained inkjet images were subjected to drying treatment under the following drying conditions to produce printed matters. Example 12 is the same as Example 1 except that a fluorine resin was used in combination to adjust a hydroxyl value to 14.75.

**[Table 1]**

| | | Example | | | | | | | | | | | | Comparative example | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 | 3 | 4 | 5 |
| Pigment dispersion | Dispersion K | 10 | 10 | 10 | 10 | 10 | 10 | 10 | 10 | - | - | - | 10 | 10 | 10 | 10 | 10 | 10 |
| | Dispersion C | - | - | - | - | - | - | - | - | 10 | - | - | - | - | - | - | - | - |
| | Dispersion M | - | - | - | - | - | - | - | - | - | 10 | - | - | - | - | - | - | - |
| | Dispersion Y | - | - | - | - | - | - | - | - | - | - | 10 | - | - | - | - | - | - |
| Fluorine resin | LUMIFLON FE4400 | 20 | 20 | 20 | 20 | 20 | 20 | 20 | 20 | 20 | 20 | 20 | 10 | 20 | 20 | 20 | - | - |
| | LUMIFLON FE4300 | - | - | - | - | - | - | - | - | - | - | - | 10 | - | - | - | 20 | - |
| | LUMIFLON FD1000 | - | - | - | - | - | - | - | - | - | - | - | - | - | - | - | - | 20 |
| Water-based solvent | Pure water | 30 | 30 | 30 | 30 | 30 | 24 | 29.8 | 23.8 | 23.8 | 23.8 | 23.8 | 30 | 30 | 30 | 30 | 30 | 30 |
| Wetting agent | N-methyl-2-pyrrolidone | 30 | - | - | - | - | 30 | 30 | 30 | 30 | 30 | 30 | 30 | - | - | - | 30 | 30 |
| | Urea | - | 30 | - | - | - | - | - | - | - | - | - | - | - | - | - | - | - |
| | 1,3-dimethyl-imidazolidinone | - | - | 30 | - | - | - | - | - | - | - | - | - | - | - | - | - | - |
| | Dimethylpropylene urea | - | - | - | 30 | - | - | - | - | - | - | - | - | - | - | - | - | - |
| | Tetramethyl urea | - | - | - | - | 30 | - | - | - | - | - | - | - | - | - | - | - | - |
| | Propylene glycol | - | - | - | - | - | - | - | - | - | - | - | - | 30 | - | - | - | - |
| | Ethylene glycol | - | - | - | - | - | - | - | - | - | - | - | - | - | 30 | - | - | - |
| | Glycerin | - | - | - | - | - | - | - | - | - | - | - | - | - | - | 30 | - | - |
| Curing agent Ultraviolet absorber Light stabilizer Anti-foaming agent | SU-268A | 10 | 10 | 10 | 10 | 10 | 10 | 10 | 10 | 10 | 10 | 10 | 10 | 10 | 10 | 10 | 10 | 10 |
| | SHINEGUARD TA-22 | - | - | - | - | - | 3 | - | 3 | 3 | 3 | 3 | - | - | - | - | - | - |
| | SHINEGUARD TL-06 | - | - | - | - | - | 3 | - | 3 | 3 | 3 | 3 | - | - | - | - | - | - |
| | FS Antifoam | - | - | - | - | - | - | 0.2 | 0.2 | 0.2 | 0.2 | 0.2 | - | - | - | - | - | - |
| Total | | 100 | 100 | 100 | 100 | 100 | 100 | 100 | 100 | 100 | 100 | 100 | 100 | 100 | 100 | 100 | 100 | 100 |
| Weather resistance | | ○ | ○ | ○ | ○ | ○ | ⊚ | ○ | ⊚ | ○ | ⊚ | ○ | ○ | ○ | ○ | Δ | ○ | ○ |
| Storage stability | | ⊚ | ○ | ○ | ⊚ | ○ | ○ | ○ | ⊚ | ○ | ○ | ○ | ⊚ | × | × | × | ○ | Δ |
| Water repellency | | ○ | ○ | ⊚ | ⊚ | ⊚ | ○ | ○ | ○ | ○ | ○ | ○ | ○ | Δ | Δ | × | ⊚ | ○ |
| Film-forming property | | ⊚ | ○ | ○ | ○ | ○ | ○ | ○ | ⊚ | ⊚ | ⊚ | ⊚ | ○ | ○ | ○ | Δ | × | ○ |

### <Inkjet conditions>

Inkjet recording apparatus: Piezo type
Nozzle diameter: 40 µm
Driving voltage: 70 V
Frequency: 12 kHz
Resolution: 400 × 800 dpi
Substrate temperature: 60°C (heating)

### <Drying conditions>

### Drying by heating (under an environment of 150°C, 10 minutes)

Inks and printed matters obtained in Examples 1 to 12 and Comparative examples 1 to 5 were subjected to evaluation by the following evaluation methods in accordance with the following evaluation criteria. The results are shown in Table 1.

### <Weather resistance>

The printed matters were subjected to 6-hour ultraviolet irradiation (UV irradiation conditions: 100 mW/cm², temperature: 63°C, humidity: 50%) as a ultra-accelerated weathering test using SUPER UV TESTER (SUV-W161 manufactured by IWASAKI ELECTRIC CO., LTD.), and then after 30-minute showering, were subjected to 2-hour dew formation by the course of nature of one cycle. Cycles were subjected 600 hours in total. Thereafter, gloss retention was measured.

### (Method of measuring gloss retention)

Gloss retention is a ratio of gloss after the ultra-accelerated weathering test to gloss before the ultra-accelerated weathering test. The gloss was measured using Gloss Checker (IG-410 manufactured by Horiba, Ltd.)

(Evaluation criteria)
⊚ : Gloss retention was 50% or more.
○ : Gloss retention was 20% or more and less than 50%.
Δ : Gloss retention was 10% or more and less than 20%.
× : Gloss retention was less than 10%.

### <Storage stability>

The inks of 100 mL after elapse of one week after production were filtrated at a reduced pressure of 600 mmHg using a filter paper having an aperture of 10 µm, and time required for dead end filtration. Thereafter, the inks were subjected to evaluation in accordance with the following evaluation criteria.

(Evaluation criteria)
⊚ : Filtration time was less than 60 seconds.
○ : Filtration time was 60 seconds or more and less than 180 seconds.
Δ : Filtration time was 180 seconds or more and less than 300 seconds.
× : Filtration time was 300 seconds or more, or filtration could not be completed.

### <Water repellency>

One droplet of pure water was dropped on the printed matters and a contact angle was measured using a contact angle measuring machine (portable contact angle meter PG-X+, manufactured by FIBRO system ab). Thereafter, the printed matters were subjected to evaluation in accordance with the following evaluation criteria.

(Evaluation criteria)
⊚ : Contact angle was 60° or more.
○ : Contact angle was 50° or more and less than 60°.
Δ : Contact angle was 40° or more and less than 50°.
× : Contact angle was less than 40°.

### <Film-forming property>

A scratching test with a pencil having a 2H hardness was carried out on the printed matters using a method described in JIS K 5600-5-4, and a coating state after the test was observed. Thereafter, the printed matters were subjected to evaluation in accordance with the following evaluation criteria.

(Evaluation criteria)
⊚ : Scratched part was not damaged.
○ : Scratched part was slightly damaged.
Δ : Scratched part was damaged.
× : Coating film was cracked or scraped off starting from the scratched part.

As shown in Table 1, according to the inks obtained in Examples 1 to 12 of the present invention, printed matters exhibiting a gross retention of 20% or more were obtained. Moreover, those inks were filtrated in a short period of time. Thus, it was considered that sedimentation did not occur during storage. Moreover, the obtained printed matters were excellent in water repellency, and a coating film having a uniform and high hardness was formed.

Meanwhile, the inks of Comparative examples 1 to 3 using the wetting agent having a hydroxy group were poor in storage stability. Moreover, much sedimentation occurred therein, and it was difficult to filtrate. The printed matter obtained using such an ink had by-products being impurities mixed in the coating film, with the result that the water repellency was inferior. Moreover, the ink of Comparative example 4 using the fluorine resin having a small hydroxyl value was inferior in film-forming property of the obtained printed matter. Further, the ink of Comparative example 5 using the fluorine resin having a large hydroxyl value caused a reaction with the curing agent, and caused degradation in storage stability and occurrence of sedimentation. Therefore, it was difficult to filtrate.

## Claims

1. A water-based inkjet ink, comprising:
a fluorine resin, a wetting agent, a pigment, a curing agent and a water-based solvent,
wherein the fluorine resin has a hydroxyl value of 10 to 30 mg KOH/g, and
wherein the wetting agent does not comprise a hydroxy group.

2. The water-based inkjet ink according to claim 1, wherein the pigment comprises an inorganic pigment.

3. The water-based inkjet ink according to claim 2, wherein the inorganic pigment is dispersed by a polymer dispersant.

4. The water-based inkjet ink according to any one of claims 1 to 3, wherein the pigment has a DBP oil absorption of 100 cm³/100 g or less.

5. The water-based inkjet ink according to any one of claims 1 to 4, wherein the fluorine resin is a copolymer comprising fluoroethylene and a vinyl monomer.

6. The water-based inkjet ink according to any one of claims 1 to 5, wherein the fluorine resin is of an emulsion type.

7. The water-based inkjet ink according to any one of claims 1 to 6,
wherein the curing agent comprises blocked isocyanate, and
wherein the blocked isocyanate comprises non-yellowing blocked isocyanate.

8. The water-based inkjet ink according to any one of claims 1 to 7,
wherein the curing agent comprises blocked isocyanate, and
wherein the blocked isocyanate comprises water-dispersing blocked isocyanate.

9. The water-based inkjet ink according to claim 7 or 8, wherein a block dissociation temperature of the blocked isocyanate is 100°C or higher.

10. A method for producing a printed matter, comprising a step of applying the water-based inkjet ink of any one of claims 1 to 9 to a substrate by an inkjet method.
